# EUROPÄISCHE PATENTSCHRIFT

(11) **EP 0 768 167 B1**
(45) Veröffentlichungstag und Bekanntmachung des Hinweises auf die Patenterteilung: **06.09.2000**
(21) Anmeldenummer: 96115990.2
(22) Anmeldetag: 05.10.1996
(51) Int. Cl.: B29C 70/20, B29C 53/58, B32B 5/26, B32B 7/10

(54) **45-Grad-Verstärkungsfasergelege, mittels klebefähigem Fadengitter fixiert, in Form einer zweilagigen kontinuierlichen Bahn und Vorrichtung zur Herstellung desselben**
Continuous two-layered composite having 45 degrees reinforcements held together through adhesive threads and apparatus for its manufacture
Nappe continue à base de fibres de renforcements à 45 degrés liées par des fils adhésifs en deux couches et appareil pour sa fabrication

(30) Priorität: 10.10.1995 DE 19537663
(43) Veröffentlichungstag der Anmeldung: 16.04.1997
(73) Patentinhaber: Pott, Richard, Dipl.-Ing., 32791 Lage (Lippe) (DE)
(72) Erfinder: Pott, Richard, Dipl.-Ing., 32791 Lage (Lippe) (DE)

(56) Entgegenhaltungen:
- DE-A- 1 635 610
- DE-A- 3 003 666
- DE-A- 3 132 697
- DE-A- 3 910 245
- FR-A- 1 514 424
- US-A- 3 096 053
- US-A- 3 663 344

## Beschreibung

Die Erfindung stellt ein Verstärkungsfasergelege und eine zugehörige Fertigungsvorrichtung dar, das mittels Haftfäden, vorzugsweise in Form eines Haftfadengitters, je eine Lage parallel orientierter Kunststoff-Verstärkungsfasem im Winkel von +-30° bis +- 85° zu einer Doppellage verbindet.

Sogenannte 45°- oder Multiaxialgelege sind bekannt. Sie haben sich insbesondere in den Einsatzbereichen bewährt, in denen keine besonders hohen Präzisionsansprüche an Fertigungsgenauigkeit, Oberflächengüte und die interlaminare Scherfestigkeit zwischen den einzelnen Laminatsschichten gestellt wurden. Dennoch sind sie konstruktionsbedingt Geweben, Vliesen und Matten aller Art wegen ihrer Belastbarkeit insbesondere bei der Armierung von torsionsbeanspruchten Bauteilen überlegen.

Die bisherigen sogenannten Multiaxialgelege werden in einem Nähwirkverfahren gefertigt. Hierbei werden Rovings (Faserbündel der Verstärkungsfasern) oder Garne parallel aneinandergelegt, in Orientierungswinkel vonn +45° und -450° gebracht und danach mittels Spezialmaschinen in einem aufwendigen und nur sehr langsam ablaufenden Verfahren vernäht. Bekannte Anbieter von Fertigungseinrichtungen zur Herstellung sog. Textilkomplexe sind die Firmen Malimo in Chemnitz; Liba in Naila sowie Karl Mayer in Obertshausen.

Die größten Nachteile für die späteren Anwendungen sind die entstehenden Lücken zwischen den vemähten Rovings und die Instabilität bezw. Verschiebbarkeit der beiden 45°-Lagen, da diese fertigungsbedingt nicht korrekt fixiert und breitgestreckt werden können. Das wiederum hat zur Folge, daß ein derartiges Gelege sich kaum stanzen läßt, ohne zu zerfallen (was z.B. bei der Fertigung von Massenbauteilen unerläßlich ist). Andererseits nehmen die lückenhaften Zwischenräume ungewollt große Mengen von festigkeitsminderndem Laminierharz auf, das zusätzliches Gewicht und eine stark eingeschränkte Oberflächenexaktheit bedingt. Ein vollflächiges, lückenlos lichtdichtes Gelege, wie es die anspruchsvollen Weiterverarbeiter in Hochtechnik-Anwendungsbereichen verlangen, läßt sieh auf diese Weise nicht herstellen. Hinzu kommt, daß sich die technischen Nachteile auch enorm auf die Wirtschaftlichkeit auswirken

In allen beschriebenen Verfahren werden Einzelfäden eingesetzt, vorwiegend nachdem sie mittels Laminierharz imprägniert waren. In dem in der US-Schrift 3 663 344 beschriebenen Verfahren handelt es sich um ein geklebtes Netzwerk unterschiedlicher Orientierung. In der AT-Schrift 313 130 wird ein Wickelverfahren für Schier beschrieben, wobei laminierharz-imprägnierte Einzelfäden in unterschiedlichen Zuführungswinkeln um einen Kern aus Fasermatten oder Stapelfasern gewickelt werden. Die DE-Schrift 31 47 228 C2.beschreibt einen mehrschichtigen Aufbau von in Z-Richtung, also in der Hochachse, durch Vernähen mittels einer Nähmaschine gebildeten Körpers als Rotorkopf für Helikopter. Die 45°-Faserorientierung bezieht sich, wie im Anspruch 1 beschrieben ausdrücklich auf die Z-Ebene, nicht auf die horizontale Ebene (X,Y); auch hier werden keine Haftfadengitter zur Verbindung einzelner Lagen verwendet. Die DE-OS 16 35 610 beschreibt ein Gitter-Netzgewebe aus Einzelfäden ohne vorgefertigtes Gelege, sie hat auch ein anderes Endprodukt zum Ziel.

Das erfindungsgemäße 45°-Verstärkungsfasergelege (5) vermeidet alle Nachteile der zuvor beschriebenen, dem derzeitigen Stand der Technik entsprechenden Produkte und Verfahren und bietet eine wesentlich höhere Präzision und Wirtschaftlichkeit. Es ermöglicht außerdem eine Erweiterung der Einsatzbereiche z.B. bei Großserienanwendungen im Automobilbau oder beim Bau von Fracht - containem und LKW-Kofferaufbauten zur Erzielung leichterer, biegesteiferer und festerer Bauteilstrukturen. Da 45°-Gelege grundsätzlich anderen textilen Flächengebilden überlegen sind, lassen sich mit dem erfindungsgemäßen Gelege bei der Erstellung von Leichtbaustrukturen, z.B. in der Wabenzellen-Sandwichbauweise, sehr hohe Werte in Bezug auf Torsions-, Zug-, Druck-, Schlag- und Biegefestigkeit erzielen. Beim Einsatz der erfindungsgemäßen 45°-Verstärkungsfasergelege (5) ist die gewichtsverursachende und festigkeitsmindernde Harzaufhahme auf ein Minimum reduziert, weil die schädlichen Laminierharz-Aufhahmeräume durch ihr Fehlen zwischen den eng aneinanderliegenden Faserbündeln (1) nicht vorhanden sind. Vorteihaft ist dabei, daß verfahrensbedingt die Faserbündel (1) an ihren Grenzflächen ineinander übergehen, sodaß eine homogene, lückenlose Schicht (1) entsteht , die durch das klebefähige Fadengitter (2) fixiert ist. Wichtig ist der dichte, lückenlose Gelegeaufbau auch in Anwendungsbereichen, wo aus dem erfindungsgemäßen Gelege in einem vielschichtigen Aufbau durch nachrägliche Verklebungen bezw. als Laminat ein hart- oder weichballistischer Personen- oder Objektschutz aus aromatischem Polyamid (z.B KEVLAR®) oder aus ultra-hochmodulem Polyethelen (z.B. DYNEEMA® bezw. SPECTRA®) entsteht.

Da bei der Herstellung weder Schußfäden noch Nähfäden Verwendung finden, die als Fremdstoff festigkeitsmindernd wirken und zu lückenhaften und welligen Oberflächen führen würden, ergibt sich durch die Verpressung der beiden +-30 bis +-85°-Lagen (3) und (4) auf die beiden dazwischen liegenden hauchdünnen Haftfäden (2), (ca. 80 dtex) eine eigenstabile unverschiebbare und stanzfähige Einheit. Moderne Textil-Klebstoffe, z.B. auf der Basis von Acrylat oder als Hotmeltkleber ermöglichen eine unlösbare Verklebung der beiden Gelegelagen (3) und (4) mit den dazwischenliegenden Haftfäden, ohne daß eine negative Beeinflussung der physikalischen Werte der Verstärkungsfasern entsteht.

Durch den Wickel- und Faltvorgang verringern sich die ursprüngliche Bahnbreite und die Lauflänge des einlagigen Ausgangstextils um ca. ein Drittel. Selbstverständlich sind auch z.B. durch Aufkaschieren zweckentsprechend Kombinationen mit anderen Faserarten möglich; auch können auf das 45°-Gelege (5) als Trägermaterial weitere Gelege unter beliebigen Orientierungswinkeln von z.B. 0° /90° oder in Form von Matten, Geweben, Klebefilm oder bestehend aus einer oder mehrerer Wabenschichten, aufkaschiert werden. Durch die Verbindung mehrerer 45°-Gelegelagen mit unterschiedlichen Faser-Orientierungswinkeln kommt man dem von vielen Anwendern von Verstärkungsfasern geäußerten Wünschen nach dem Ideal eines 'Quasi-Isotrops' weitgehend entgegen. Hierzu kann der Faserverbundwerkstoff in alle Richtungen gleichstark beansprucht werden und das unter Nutzung aller physikalischen Möglichkeiten, die nur gleichgerichtete und vorgespannte Faserbündel bieten.

### Einige Einsatzbeispiele:

Rümpfe, Ein- und Aufbauten im Boots- und Schiffbau; Frachtcontainer und Isolieraufbauten für LKW's in Leichtbauweise;
Beplankungen für Rümpfe, Trag- und Leitwerke sowie Rotorblätter und Radome im Flugzeugbau;
Hauben, Deckel, Türen, Integrierter Seitenaufprallschutz, überrollfeste Dächer u.a. im PKW-Bau;
Rotorblätter für Windkraftanlagen;
Sportgeräte allgemein, z.B. Schier oder Snowboards;
ballistischer Personen und Objektschutz, z.B. Kugelschutzwesten und Fahrzeugpanzerung.

Der Kaskadeneffekt im Transportbereich: Geringeres Gewicht = größere Zuladung = geringerer Kraftstoffverbrauch = größere Wirtschaftlichkeit = geringere Umweltbelastung etc.

### Beschreibung des 45° - Geleges und der Vorrichtung zu seiner Herstellung:

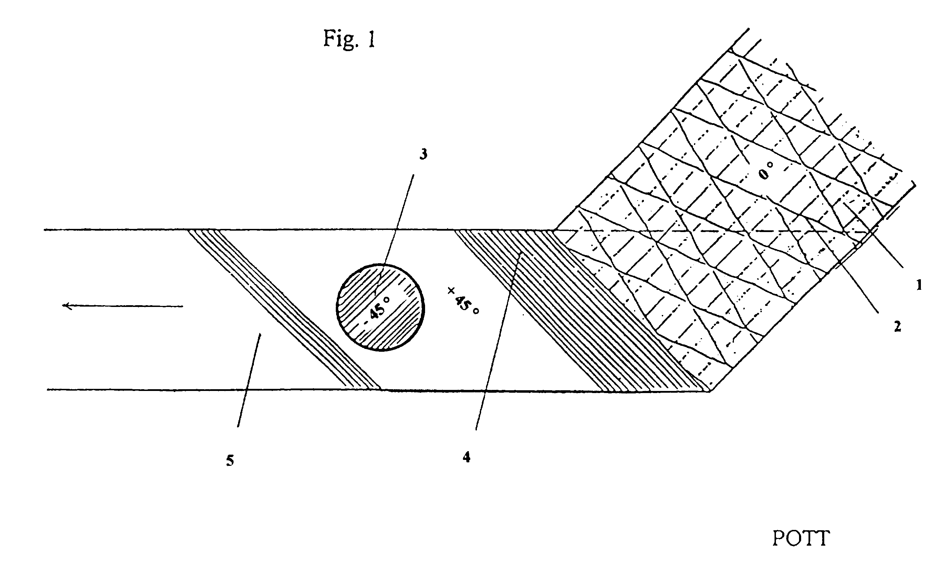

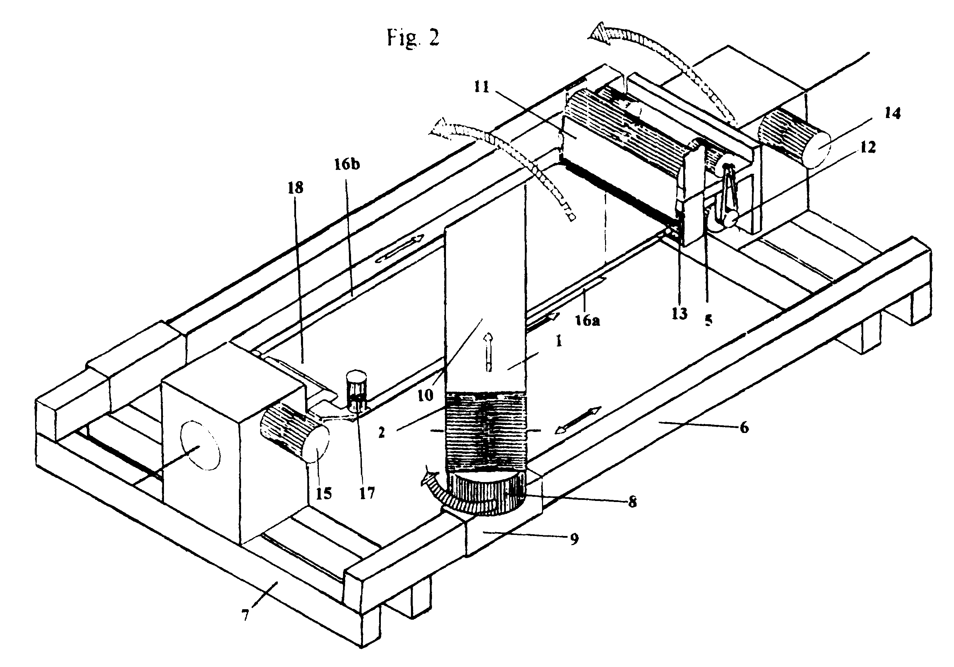

Zur Herstellung des erfindungsgemäßen 45°-Geleges wird als Ausgangsmaterial ein vorgefertigtes einlagiges Gelege, bestehend aus den Faserbündeln (1) und dem klebefähigen Fadengitter, auch Haftfadengitter (2) genannt, eingesetzt. Das Fadengitter (2) wurde vor der Aufbringung auf die parallel aneinanderliegenden Faserbündel (1) mittels einer Imprägnieranlage durch Aufbringen eines geeigneten Textilklebers klebefähig gemacht, durch Aufwalzen auf die Faserbündel mit diesen verbunden und mit einer antiadhäsiv wirkenden Schutzfolie abgedeckt und aufgerollt. Diese Rolle dient bei der Weiter - verarbeitung als Abrollung (10), in einer entsprechen Halterung gelagert. Durch eine später zu beschreibende Vorrichtung (Fig. 2) wird in einem Faltverfahren das zulaufende einlagige Gelege gefaltet und unter Nutzung des klebefähigen Fadengitters (2) zu einem zweilagigen Textil (5) umgeformt, wobei auch das ursprünglich einlagige klebefähige Fadengitter (2) mitgefaltet wird und dessen Klebekraft für die Verklebung beider Gelegelagen in je eine Lage mit einer Faserorientierung von +45° (4) und -45° (3) genutzt wird. Dieses zweilagige Gelege (5) durchläuft eine Doppelwalzen-Pressvorrichtung (11), hat eine glatte Außenfläche, wird aufgewickelt und kann danach seiner Bestimmung zugeführt werden.

### Vorrichtung:

Die Vorrichtung zur Herstellung des Verstärkungsfasergeleges wird in Modulbauweise erstellt und ist in Fig. 2 dargestellt. Die vorgefertigte einlagige Gelegebahn (1) bezw. (10) auf einer Vorratstrommel ist auf einem horizontal drehbaren Support (8) gelagert und dieser wiederum auf einem Stellschlitten (9), der sich parallel zu dem Fundament-Holm (6) bewegen läßt zwecks Anpassung des Zulaufwinkels der einlagigen Gelegebahn (1) bezw. (10) an die Wendetischplatte (18), um unterschiedliche Faltwinkel zu ermöglichen.

Der Maschinen-Fundamentrahmen, dargestellt in Figur 2, besteht aus den beiden Längsholmen (6) und den Doppel-Querholmen (7). Leztere nehmen die Wickelmodule (14) und (15) als Antriebe für die Drehung der Wendetischplatte (18) auf, wobei beide Wickelmodule (14) und (15) synchron zueinander und zu der Doppelwalzen-Preßvorrichtung (11) sowie der Aufwicklung (12) arbeiten. Die Wendetischplatte (18) ist antiadhäsiv beschichtet bezw. besteht aus antiadhäsivem Material und hat an seinen Außenkanten kleine Förderbänder (16b) und (16a) die mittels eigener Antriebe (17) angetrieben werden können. Diese sogenannten Kantenförderbänder (16b) und (16a) sind bei dem Faltvorgang, bei dem die zulaufende einlagige Gelegebahn (10) durch die sich um ihre Längsachse drehende Wendetischplatte (18) von der Trommel abgezogen wird und Kante an Kante lückenlos aneinander liegend abgelegt wird, von großer Bedeutung. Einerseits wird eine ausgeprägt scharfe Kante für die spätere Verpressung mittels Doppelwalzen-Pressvorrichtung (11) vorgeformt und andererseits wird der Abzug der oberen (4) und unteren (3) Gelegebalin als Unterstützung des Abzuges durch die Aufwicklung (12) unter Zulaufes einer antiadhäsiven Folie (13) od. dergl. unterstützt. Die Wendetischplatte (18) und alle damit fest verbundenen Einrichtungen werden durch die beiden Wickelmodule (14) und (15) in eine kontinuierliche Drehung versetzt. Das fertige erfindungsgemäße zweilagige 45° -Gelege (5) wird von der angetriebenen Aufwicklung (12) unter Zulauf einer Folie (13) zur Sicherung der Oberflächenqualtät von der Wendetischplatte abgezogen und aufgewickelt.

Das Endprodukt (5), das weiterverarbeitungsfertige 45°-Gelege, stellt ein hochwertiges Halbzeug dar mit beidseitig glatten und lückenlosen Außenflächen, das viele Anwendungsanforderungen in den Bereichen Industrietextilien sowohl für armierte, härtbare Kunststoffe, als auch für antiballistischen Personen-, Fahrzeug- und Objektschutz abdeckt.

In den Zeichnungen sind das Faltprinzip und die Vorrichtung mit dem daraus ersichtlichen Fertigungsablauf schematisch dargestellt.

Es zeigen:
Fig. 1
   das Faltprinzip mit den Einzelheiten:
   1. parallel aneinanderliegende breitgestreckte Faserbündel der Verstärkungsfasern,
   2. klebefähiges Fadengitter für die Fixierung der Faserbündel,
   3. -45°-Gelege-Lage,
   4. +45°-Gelege-Lage,
   5. fertige +-45°-Zweifhchlage.
Fig. 2
   die Fertigungs-Vorrichtung mit den Einzelheiten:
   6. Fundamentrahmen-Längsholme,
   7. Fundamentrahmen-Querholme,
   8. Horizontal-Drehsupport mit verbundener, gebremster Abzugstrommel,
   9. Stellschlitten, auf dem Längsholm verschiebbar,
   10. einlagiges Ausgangstextil, identisch mit (1) + (2),
   11. Doppelwalzen-Pressvorrichtung (Kaschierwerk),
   12. Aufwicklung für Fertiggelege,
   13. Aufnahmetrommel für Folie zur Qualitätssicherung,
   14. Wickelmodul der Aufrollung für das 45°-Fertiggelege und die Wendetischplatte, synchron zu
   15. Wickelmodul der Wendetischplatte,
   16a u. 16b. Kantentransportbänder,
   17. Antrieb für Kantentransportbänder,
   18. antiadhäsiv beschichtete Wendetischplatte, 360° drehbar.

## Patentansprüche

1. 45°-Verstärkungsfaser-Gelege, mittels klebefähiger Fadengitter (2) fixiert in Form einer zweilagigen endlosen Bahn (5), bestehend aus parallel lückenlos aneinander liegenden Faserbündeln (1), **dadurch gekennzeichnet,** daß eine einlagige vorgefertigte Bahn (1) und (10) als Ausgangstextil. bestehend aus parallel orientierten Faserbündeln (1), fixiert durch ein klebefähiges Fadengitter (2), durch Faltung zu einer zweilagigen Gelegebahn (5) umgeformt wird, und daß durch einen Wickel- und Faltvorgang, der eine Schichtung in je eine obere und untere Gelegelage mit einer Winkelzuordnung von +45° (4) und -45° (3) bezogen auf die 0°-Ebene der Wendetischplatte (18) ermöglicht wird, daß nach dem Wickel- und Faltvorgang unter Nutzung der Klebewirkung der beiden nunmehr innen liegenden Fadengitter (2) eine gegeneinander unverschiebbare eigenstabile Textilbahn (5) entsteht.

2. Gelege nach Anspruch 1, dadurch gekennzeichnet, daß die Fäden des Fadengitters (2) mit einem härtbaren Kunstharz auf Hotmeltbasis oder einem permanent wirkenden Kleber benetzt sind.

3. Gelege nach Anspruch 1, dadurch gekennzeichnet, daß die Faserbündel (1) aus Kunststoff-Verstärkungsfasern aus Glas, Carbon, aromatischem Polyamid, Polyester, Polyethylen, Siliziumcarbid oder aus Naturfasern wie Hanf, Flachs, Sisal oder Kokos bestehen

4. Gelege nach Anspruch 1, dadurch gekennzeichnet, daß die Fäden des klebefähigen Fadengitters (2) aus Glas, Carbon, Zellwolle, Polyester, Polyethylen, aromatischem Polyamid oder einem Klebefilm bestehen.

5. Gelege nach Anspruch 1, dadurch gekennzeichnet, daß das fertige Gelege (5), bestehend aus den beiden Lagen (3) und (4) und den beiden dazwischen liegenden klebefähigen Fadengittern (2) mit einer oder mehreren Lagen Honigwaben auf einer oder beiden Außenflächen durch Aufkaschieren oder Laminieren miteinander verbunden sind.

6. Vorrichtung zur Herstellung des Verstärkungsfaser-Geleges nach Anspruch 1 und einem der nachfolgenden Ansprüche, dadurch gekennzeichnet, daß auf der Fundament-Rahmenkonstruktion (6) und (7) mit den beiden synchron angetriebenen Wickelmodulen (15) und (14) eine Wendetischplatte (18) die von einer Ablauftrommel abgezogene einlagige Bahn (10) aufnimmt und durch die Drehung eine Faltung der einlagigen Bahn (1) und (10) Kante an Kante liegend, zu einer zweilagigen Verstärkungsfaser-Gelegebahn (5) mit dazwischenliegenden klebefähigen Fadengittern (2) bewirkt.

7. Vorrichtung zur Herstellung des Verstärkungsfaser-Geleges nach Anspruch 6, dadurch gekennzeichnet, daß beiderseits der Wendetischplatte (18) je ein Kantentransportband (16b) und (16a) mit den Antrieben (17) angeordnet ist.

8. Vorrichtung zur Herstellung des Verstärkungsfaser-Geleges nach Anspruch 6, dadurch gekennzeichnet, daß zur Vorbestimmung des Wickel- und Faltwinkels und für die Zuführung der vorgefertigten einlagigen Bahn (1) mit der glatten Oberseite (10) und der mit dem verklebten Fadengitter versehenen Unterseite (2) als Ausgangstextil die Aufnahmetrommel auf einem Drehsupport (8) angeordnet und dieser mit dem Stellschlitten (9) verbunden ist.

9. Vorrichtung zur Herstellung des Verstärkungsfaser-Geleges nach Anspruch 6, dadurch gekennzeichnet, daß die Wendetischplatte (18) mit Antihaftbeschichtung von den Wickelmodulen (14) und (15) als Antrieb für die Wendetischplatte in eine kontinuierliche Drehung versetzt wird und die Aufnahme des fertigen 45°-Verstärkungsfasergeleges (5) durch die Aufwicklung (12) erfolgt, synchron zu (14) und (15), nachdem die vorgefertigte nunmehr zweilagige Bahn (5) zwecks Verpressung der Oberseite (4) mit der Unterseite (3) und beide zusammen mit den dazwischenliegenden klebefähigen Fadengittern ein Kaschierwerk (11) durchlaufen haben.

## Claims

1. 45 degrees reinforcing fiber web fixed by means of a fixing grid in the form of a double- layered continuous band (5), consisting of bundles of fibers (1) laid parallel next to each other without gaps, characterized by the fact that a single-layered prefabricated elongated band (1) and (10) serving as a basic textile, consisting of parallel orientated bundles of fibers (1), and fixed by means of bondable grid of adhesive threads, is transformed into a double-layered filamentary web (5) and, that by means of a winding and folding process which enables an arrangement in layers of an upper and lower web layer each with an angle orientation of +45° (4) and -45°(3) in relation to the 0° plain of the revolving desktop (18), and that after the winding and folding procedure and the utilization of the adhesive action of both of the grid of adhesive threads (2), henceforth situated on the inside, produce an inherently stable textile web (5) whose layers are not capable of being displaced from each other.

2. A web as described in claim 1., characterized by the fact that the threads of the grid of adhesive threads (2) are coated with a hardenable synthetic resin on a hotmelt basis or with a permanent acting adhesive.

3. A web as described in claim 1., characterized by the fact that the threads of the bundle of fibers (1), consist of synthetic reinforcing fibers from the following material: glass; carbon; aromatic polyamide; polyester; ultra high-modulus polyethylene; silicium carbide or of natural fibers such as hemp, linen, aloe hemp or coconut.

4. A web as described in claim 1., adhesive/bonding threads (2) consist of glass; carbon; viscose; rayon staple fiber; polyester; ultra high-modulus polyethylene; aromatic polyamide or an adhesive film.

5. A web as described in claim 1., characterized by the fact that the finished web (5), consisting of the two layers (3) and (4) and the two adhesive/bonding grids of adhesive threads (2) laid between these are joined with one or several layers of honeycombs or on one or both outer surfaces by means of pressing or laminating.

6. Apparatus for the manufacture of a reinforcing fiber web 25 as in claim 1. and one of the following claims, characterized by the fact on the foundation chassis (6) and (7) with the synchronically powered winding module (15) and (14), a revolving desktop (18) which picks up a single layered web from a feed reel and by the revolving folds the one layered web (1) and (10) border to border, thus producing a two-layered reinforcing fiber web (5) with a grid of threads, capable of bonding, situated between the aforesaid.

7. Apparatus for the manufacture of a reinforcing fiber web according to claim 6., characterized by the fact that on botb sides of the revolving desk top (18) a border conveyor (16b) and (16a) is arranged in the mechanized powering system.

8. Apparatus for the manufacture of a reinforcing fiber web according to claim 6, characterized by the fact that a pick up drum, joined with the adjustable base (9) is arranged on a revolving support (8), in order to predetermine the winding- and folding angle, and for the feeding of the prefabricated one-layered web (1) with the smooth upper surface (10) and with the lower surface with its coating bonding/conglutinated grid of adhesive threads (2) as a basic textile.

9. Apparatus for the manufacture of a reinforcing fiber web as in claim 6. characterized by the fact that the revolving desk top (18) with it's anti-adhesive coating is set into a continuous revolving action by the winding module (14) and (15) as means of powering for the revolving desk top and that the pick up of the finished 45 degrees reinforeing fiber web by means of the winding up (12), synchronically to (14) and (15), after the prefabricated henceforth two-layered web (5) have been passed through a pair of pressure rollers in order that the upper surface (4) and the lower surface (3) are pressed together with the bonding/conglutinous grid of adhesive threads situated between them.

## Revendications

1. 45 degrés reinforcing fibre nappe fixe au moyen un fixing grille sous forme un double-double-layered continu bande (5), consisting of paquet fibre (1) étendre parallèle à côté 1 un l'autre sans intervalle, caractériser par fait que un simple-single-layered préfabriquer ovale bande (1) et (10) portion comme un de base textile, consisting of parallèle orient paquet fibre (1), et fixe au moyen bondable grille adhésif menace, transformer dans un double-double-layered filamenteux nappe (5) et, que au moyen un enroulement et folding processus qui permette un agencement dans couche un superérieur et bas nappe couche chaque avec un angle orientation +45°(4) et -45°(3) l'appareil de table de rotation (18), et celui après que le procédé d'enroulement et de pliage et l'utilisation de l'action adhésive de toutes les deux grille des amorçages d'adhésif (2), dorénavant située sur l'intérieur, produisent un nappe en soi stable de textile (5) dont les couches ne sont pas capables de l'déplacement de l'un l'autre.

2. Nappe comme décrit dans la revendication 1, charactérisée par le fait que les amorçages (2) sont enduits d'une résine synthétique durcissable sur une base de hotmelt ou d un adhésif temporaire permanent.

3. Nappe comme décrit dans la revendication 1, charactérisée par le fait que les menaces du faisceau de fibres (1), se composent des fibres de renforcement synthétiques du matériel suivant:
verre; carbone; polyamide aromatique; polyester; carbure de silicium ou fibres normales telles que le chanvre; toile; chanvre ou noix de coco d'aloès.

4. Nappe comme de'crit dans la revendication 1, amorçages d adhesive/bonding (2) se composent du verre; carbone; visqueux; fibre d agrafe; polyester; ultra polyethelene de haut-module; polyamide aromatique ou un film adhésif

5. Nappe comme de'crit dans la revendication 1, charactérisée par le fait que le nappe terminé (5), comprenant les deux couches (3) et (4) et les deux grilles d'adhesive-bonding des amorçages adhésifs (2) étendus entre ces derniers sont joints avec un ou plusieurs couches de nid d'abeilles ou sur une ou les deux surfaces externes au moyen d'appuyer ou stratifier.

6. Appareil pour la fabrication d'un nappe renforcé de fibre comme dans la revendication 1, et un des réclamations suivantes, caractérisé par le fait sur le châssis de base (6) et (7) avec le module d' enroulement synchronically actionné (15) et (14), un appareil de table de rotation (18) qui prend un nappe posé simple d'une bobine d'alimentation et par la rotation plie l'un nappe posé (1) et (10) cadre pour encadrer, de ce fait produire un nap de renforcement deux-two-layered de fibre (5) avec une grille des amorçages, capable de la métallisation, situés entre le susmentionné.

7. appareil pour la fabrication d'un nappe de renforcement selon la revendication 6., charactérisée par le fait qui des deux côtés de l'appareil de table de rotation (18 un convoyeur de cadre (16b) et (1a) est arrangés dans le système d'alimentation mécanisé.

8. appareil pour la fabrication d'un nappe de renforcement de fibre selon la revendication 6, charactérisée par le fait quune sélection vers le haut du tambour, jointif avec la base réglable (9) est arrangée sur un support de rotation (8), afin de prédéterminer l'angle d'enroulement et de pliage, et pour l'alimentation du nappe un-one-layered préfabrique'é(1) avec l'extrados doux (10) et avec l'intrados avec son grille enduisante de bonding/conglutinated des amorçages d'adhésif (2) comme textile de base.

9. appareil pour la fabrication un renforcer fibre nappe comme dans réclamation 6., caractériser par fait que tourner appareil de table (18) avec anti-adhésif enduit placer dans continu tourner action par enroulement module (14) et (15) comme moyen actionner pour tourner appareil de table et que sélection vers le haut terminer 45° renforcer fibre nappe au moyen enroulement vers le haut (12), synchronically (14) et (15), après que préfabriquer dorénavant deux-two-layered nappe (5) avoir passer à travers un paire pressure rouleau pour que upper extrados (4) et lower intrados (3) appuyer ainsi que bonding/conglutinous grille adhésif amorçage situer entre.
